# EUROPEAN PATENT SPECIFICATION

(11) **EP 4 053 015 B1**
(45) Date of publication and mention of the grant of the patent: **11.10.2023**
(21) Application number: 21215014.8
(22) Date of filing: 16.12.2021
(51) Int. Cl.: B64C 5/02, B64C 5/10, B64C 27/08, B64C 27/82

(54) **INTERMESHING DUAL-ROTOR HELICOPTER AND HORIZONTAL TAIL CONTROL SYSTEM**
HELIKOPTER MIT INEINANDERGREIFENDEM DOPPELROTOR UND HÖHENLEITWERKSTEUERUNGSSYSTEM
HÉLICOPTÈRE BIROTOR À ENGRENAGE ET SYSTÈME DE COMMANDE DE QUEUE HORIZONTALE

(30) Priority: 01.03.2021 CN 202110222754
(43) Date of publication of application: 07.09.2022
(73) Proprietor: Beijing Tsingaero Armanment Technology Co., Ltd, Beijing 102101 (CN)
(72) Inventor: Wang, Xianyu, Beijing 102101 (CN); Yin, Mingwei, Beijing 102101 (CN); Hai, Rihan, Beijing 102101 (CN); Bao, Changchun, Beijing 102101 (CN); Xu, Zhenhan, Beijing 102101 (CN); Li, Jingyang, Beijing 102101 (CN)
(74) Representative: Patentanwaltskanzlei Matschnig & Forsthuber OG

(56) References cited:
- EP-A1- 4 091 940
- CN-A- 102 815 394
- CN-A- 103 466 076
- CN-A- 105 416 570
- CN-A- 109 278 995
- CN-A- 111 169 631
- CN-A- 112 093 041
- GB-A- 891 749
- US-A1- 2019 291 863

## Description

### FIELD

The present application relates to the technical field of aircrafts, in particular to an intermeshing dual-rotor helicopter and a horizontal tail control system.

### BACKGROUND

A horizontal tail wing of an airplane is abbreviated as a horizontal tail, which is a wing surface for longitudinal balance, stability and control of the airplane. Horizontal tails are symmetrically distributed on both sides of the airplane. Generally, a front half of the horizontal tail is fixed, and a rear half is hinged on the front half, which is referred as an elevating rudder. An angle of the horizontal tail is changed by changing an angle of the elevating rudder. Herein, a direction toward an airplane nose is defined as front, and a direction toward an airplane tail is defined as rear.

During a flight process of the airplane, the horizontal tail mainly achieves the following functions:
firstly, a lift force is impossible to pass the center of gravity at any time during the flight process, so there is an unbalanced torque, which is balanced by changing a posture of the rear half relative to the front half;
secondly, various interferences may cause the airplane to deviate from its original posture during the flight process. By changing a tilt angle of the rear half relative to the front half, the posture of the airplane is restored, which stabilizes the airplane in a longitudinal direction;
thirdly, the posture needs to be actively changed during the flight process, such as climbing, level flight, and gliding. In case that it is necessary to overcome a stable torque, the horizontal tail is capable of generating a head-up torque to control the airplane to change the posture by changing the posture of the rear half.

It can be seen from the above description that in the conventional technology, corresponding functions of the airplane during the flight process are realized by changing the posture of the rear half relative to the front half.

Among the prior arts, the patent of GB891749A discloses to a tail plane for a helicopter and, more particularly, to a tail plane designed to improve the stability of a helicopter in level flight and to impart no appreciable deflection from trim during climbing or gliding flight for altitude change. The patent of CN105416570A relates to a tilting horizontal tail with a power mechanism, which comprises an aircraft body, a vertical tail and a tilting flat tail, wherein the vertical tail and the tilting flat tail are arranged on the aircraft body. The tilting horizontal tail is characterized in that the tilting flat tail comprises a flat tail beam penetrating the vertical tail and horizontal tail bodies arranged on the flat tail beam, and an actuator used for driving the flat tail beam to rotate is further arranged in the vertical tail. The patent of CN103466076A relates to a follow-up device of a horizontal tail of an airplane. The device is characterized by comprising a sealing plate, a roller trigger device, a torque arm support, a stop block, a torque arm, a hinge, a hinge support, a torque rod, a torque rod mounting support, a hinge support and a hinge, wherein the roller trigger device is mounted on the sealing plate, the two hinges are mounted on the sealing plate coaxially, the hinges are connected with the hinge supports, and the hinge supports are connected with an external machine body. The patent of CN111169631A discloses a tilt rotor unmanned aerial vehicle. The rear end of a front fuselage is detachably connected with the front end of a rear fuselage; the upper side of the front fuselage is detachably connected with a central wing; the two ends of the central wing are rotationally connected with outer wings correspondingly. A driving motor is arranged in the outer wing; propellers are arranged on output shafts of the driving motors, tilting steering engines are arranged in the outer wings, rotating shafts of the tilting steering engines are connected with the central wing through first swinging assemblies, the tilting steering engines drive the two outer wings to be switched between a horizontal rotating state and a vertical rotating state, and two full-motion horizontal tails are arranged at the end, deviating from the front fuselage, of the rear fuselage; and the rotating shafts of the tilting steering engines are horizontally arranged. The purpose is to solve the problem that in the prior art, a fixed wing flight mode and a rotor wing flight mode cannot coexist on the same unmanned aerial vehicle. In addition, the patent of EP4091940A1 discloses an electric tiltrotor aircraft, which includes a fuselage; a wing connected to the fuselage; and first and second propulsion systems connected to the wing on opposite sides of the fuselage, wherein at least a portion of each of the first and second propulsion systems and at least a portion of the wing are tiltable between a first position in which the aircraft is in a hover mode and a second position in which the aircraft is in a cruise mode, wherein each of the propulsion systems includes pylon and a rotor assembly comprising a plurality of rotor blades. The patent of US20190291863A1 discloses a self-piloted, electric vertical takeoff and landing (VTOL) aircraft that are safe, low-noise, and cost-effective to operate for cargo-carrying and passenger-carrying applications over relatively long ranges. A VTOL aircraft has a tandem-wing configuration with one or more propellers mounted on each wing to provide propeller redundancy, allowing sufficient propulsion and control to be maintained in the event of a failure of any of the propellers or other flight control devices. The arrangement also allows the propellers to be electrically-powered, yet capable of providing sufficient thrust with a relatively low blade speed, which helps to reduce noise. An object of the present application is to provide a horizontal tail control system, which is capable of changing torque quickly and improving the torque supply efficiency. In addition, another object of the present application is to provide an intermeshing dual-rotor helicopter including the above horizontal tail control system.

However, current conventional segmented horizontal tail design is slow in torque change, low in torque supply efficiency, which is further complicated in structure, and high in cost.

### SUMMARY

A horizontal tail control system is provided according to claim 1 of the present invention.

Compared with the horizontal tails in the background technology, horizontal tails in the present application and the fuselage are rotatably connected by the rotating assembly. Under the action of the driving assembly, the entire horizontal tail is capable of rotating by a predetermined angle relative to the fuselage to meet the requirements of different operating conditions during the flight process of the airplane. Since the entire horizontal tail is capable of rotating relative to the fuselage, a large torque change may be realized by rotating the horizontal tail at a small angle, which greatly improves the torque supply efficiency.

In an embodiment, the rotating assembly includes a bearing seat and a bearing. The bearing includes an inner ring and an outer ring which rotate relative to each other, where the outer ring of the bearing is mounted and fixed at a mounting hole of the bearing seat, and the inner ring is positioned with and mounted on the center rod, an end of the center rod passes through the inner ring on a corresponding side to connect and fix the two horizontal tails.

In an embodiment, the horizontal tail control system further includes a snap ring, an inner hole of the bearing seat is a step hole, the step hole includes a large-diameter hole section and a small-diameter hole section. A step surface is formed at a connecting position of the large-diameter hole section and a small-diameter hole section, where the large-diameter hole section is further provided with an annular groove for mounting the snap ring, and the outer ring of the bearing is mounted between the step surface and the snap ring.

In an embodiment, the horizontal tail control system further includes a limit retaining ring, where the center rod is further provided with a limit groove fitted to the limit retaining ring for installation, where the limit retaining ring is configured to limit an outward axial displacement of the inner ring.

In addition, an intermeshing dual-rotor helicopter is further provided according to claim 5 of the present invention, which includes the fuselage and the horizontal tail control system described in any one of the above.

The intermeshing dual-rotor helicopter provided according to the present application has the above horizontal tail control system, so the intermeshing dual-rotor helicopter also has the above technical effects of the horizontal tail control system.

### BRIEF DESCRIPTION OF THE DRAWINGS

FIG. 1 is a structural schematic diagram of a horizontal tail control system in an embodiment of the present application;
FIG. 2 is a structural schematic diagram of a rotating assembly in an embodiment of the present application;
FIG. 3 is a sectional view at A-A in FIG. 2;
FIG. 4 is a schematic diagram of another side of the rotating assembly shown in FIG. 2;
FIG. 5 is an enlarged view of a connecting position of a connecting piece and a rudder driving shaft in an embodiment of the present application;
FIG. 6 is a partial schematic diagram of a position that a connecting piece and a center rod are connected to each other in an embodiment of the present application;
FIG. 7 is a partial schematic diagram of a position that a center rod and a horizontal tail are fixed and connected to each other in an embodiment of the present application.

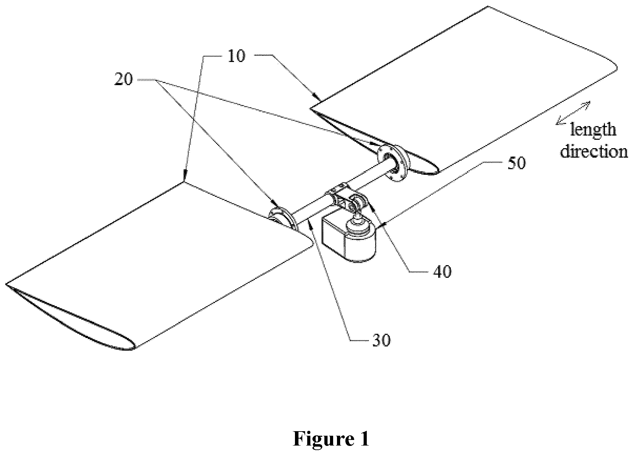

A one-to-one correspondence relationship between reference numerals and various components in FIG. 1 to FIG. 7 is as follows:
10-horizontal tail; 11-supporting rib; 12-screw; 20-rotating assembly; 201-bearing seat; 202-bearing; 201a-bolt hole; 21-limit retaining ring; 23-snap ring; 2021-outer ring; 2022-inner ring; 30-center rod; 40-connecting piece; 401-sleeve; 402-U-shaped mounting frame; 40a-through hole; 41-positioning steel sleeve; 42-ball of joint deep groove ball bearing; 43-ball head of joint deep groove ball bearing; 50-rudder; 60-bolt.

### DETAILED DESCRIPTION OF THE EMBODIMENTS

In order to provide those skilled in the art a better understanding of the solutions of the present application, the present application is described hereinafter in further detail in conjunction with the drawings and embodiments.

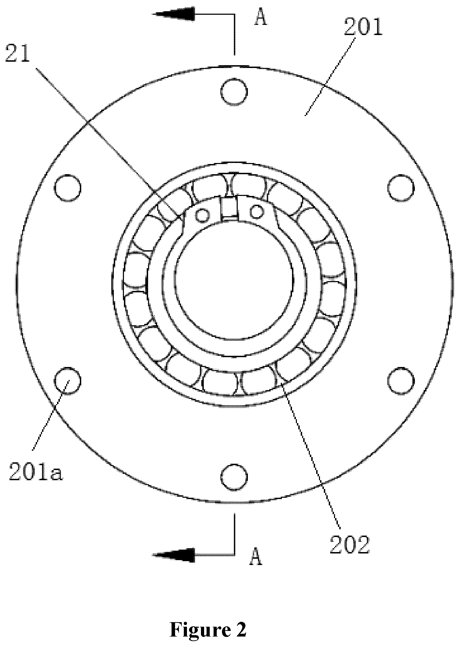

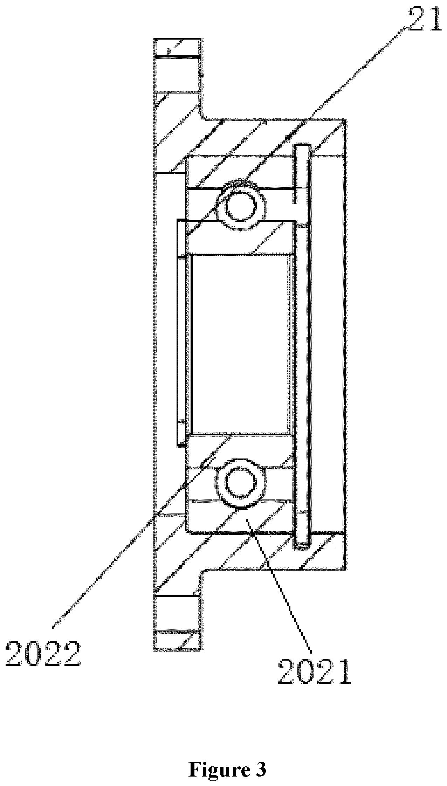

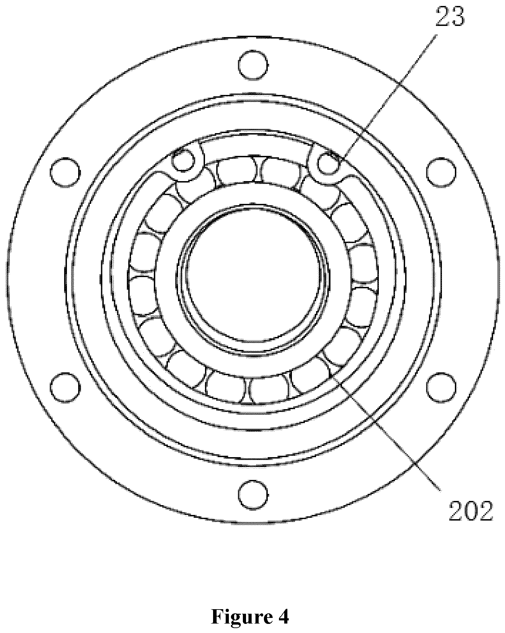

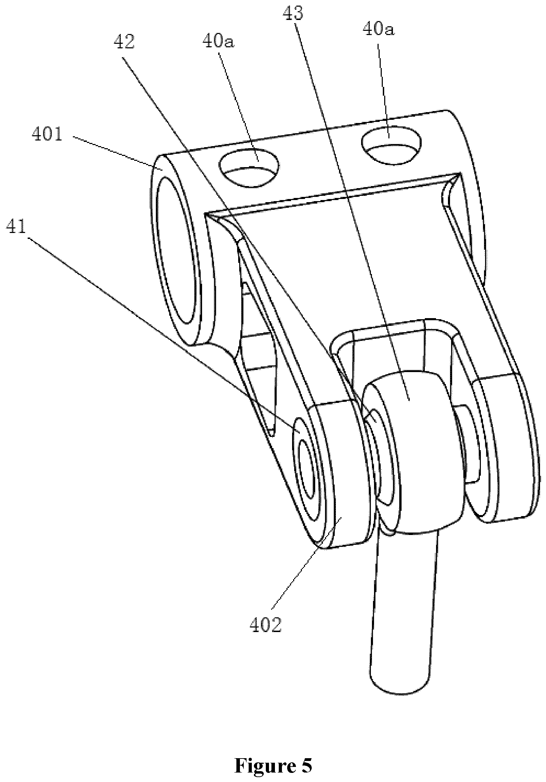

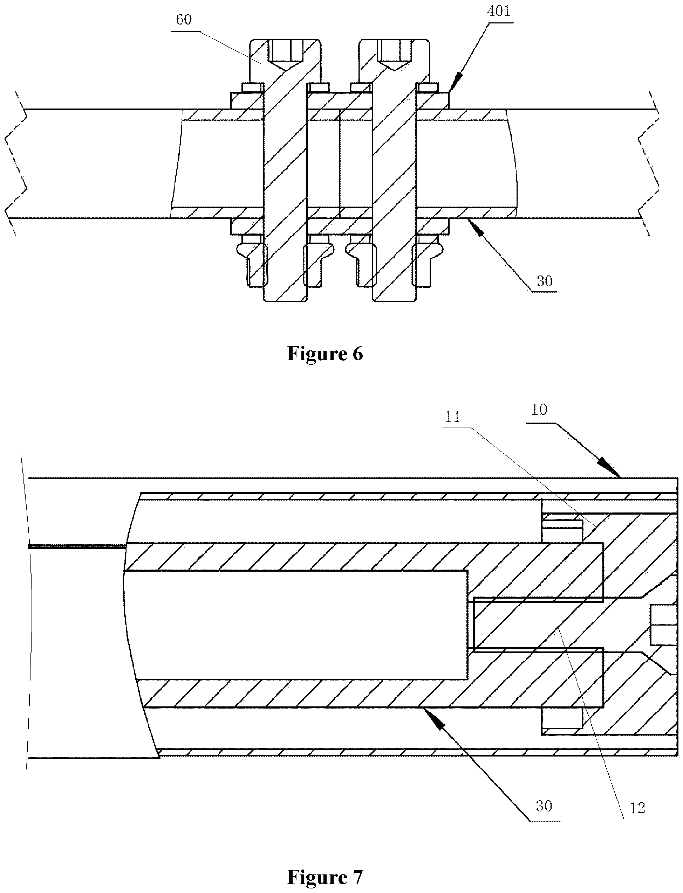

Reference is made to FIG. 1 to FIG. 5, where FIG. 1 is a structural schematic diagram of a horizontal tail control system in an embodiment of the present application; FIG. 2 is a structural schematic diagram of a rotating assembly in an embodiment of the present application; FIG. 3 is a sectional view at A-A in FIG. 2; FIG. 4 is a schematic diagram of another side of the rotating assembly shown in FIG. 2; FIG. 5 is an enlarged view of a connecting position of a connecting piece and a rudder driving shaft in an embodiment of the present application; FIG. 6 is a partial schematic diagram of a position that a connecting piece and a center rod are connected to each other in an embodiment of the present application; FIG. 7 is a partial schematic diagram of a position that a center rod and a horizontal tail are fixed and connected to each other in an embodiment of the present application.

A horizontal tail control system is provided according to the present application, which includes a driving assembly, a rotating assembly 20 and two horizontal tails 10. An outer contour of a main body of the horizontal tail 10 may be an integral structure. The so-called integral structure herein means that the main body of the horizontal tail 10 is a one-piece structure. The material of the main body of horizontal tail 10 may be picked to meet requirements of use, and is not limited herein.

The two horizontal tails 10 in the present application are symmetrically arranged on the fuselage, and are capable of being rotatably supported on a fuselage through the rotating assembly 20. A center shaft of the rotating assembly 20 is parallel to length extension directions of the two horizontal tails 10. The rotating assembly 20 is provided mainly to realize a relative rotation of the horizontal tail 10 and the fuselage, which may be a bearing, of course, which may also be other parts that can realize relative rotation of the two assemblies.

The driving assembly in the present application is configured to drive the two horizontal tails 10 to rotate around the center shaft of the rotating assembly 20. The driving assembly may be an electric driving assembly; of course, it may also be a hydraulic driving assembly. A specific driving assembly is described in detail hereinafter.

Compared with the horizontal tails 10 in the background technology, which is partially fixed to the fuselage, horizontal tails 10 in the present application and the fuselage are rotatably connected by the rotating assembly 20. Under the action of the driving assembly, the entire horizontal tail 10 is capable of rotating by a predetermined angle relative to the fuselage to meet the requirements of different operating conditions during the flight process of the airplane. Since the entire horizontal tail 10 is capable of rotating relative to the fuselage, a large torque change may be realized by rotating the horizontal tail 10 at a small angle, which greatly improves the torque supply efficiency.

In a torque change process, the two horizontal tails 10 on both sides of the airplane usually need to have synchronicity in torque change. In order to maximize the synchronicity in torque change of the two horizontal tails 10, the following improvements have further been made herein.

In a specific embodiment, the horizontal tail control system further includes a center rod 30, two ends of the center rod 30 are respectively connected and fixed to the two horizontal tails 10. The center rod 30 is rotatably supported on the fuselage through the rotating assembly, and a center shaft of the rotating assembly 20 is parallel to a length extension direction of the two horizontal tails 10, where the length direction of the two horizontal tails 10 is shown in FIG. 1. Further, the center rod 30 is driven by the driving assembly to rotate around the center shaft of the rotating assembly.

In case of performing a torque change control, a center shaft is driven by the driving assembly to rotate, and the center shaft drives the two horizontal tails 10 located on both sides of the center shaft to rotate around a center axis of the center shaft, so as to realize a synchronous rotation of the two horizontal tails 10 and adjust the posture of the two horizontal tails 10 to adapt to requirements of different airplane operating conditions.

In a specific embodiment, the rotating assembly 20 may include a bearing seat 201 and a bearing 202, the bearing 202 includes an inner ring 2022 and an outer ring 2021 rotatable relative to each other, where the outer ring 2021 of the bearing 202 is mounted and fixed at a mounting hole of the bearing seat 201, and the inner ring 2022 is positioned with and mounted on the center rod 30, an end of the center rod 30 passes through the inner ring 2022 to connect and fix the two horizontal tails 10. A bolt hole 201a may be machined on the bearing seat 201, which may fixedly connected to the fuselage by bolts. Of course, the bearing seat 201 may also be fixedly connected to the fuselage in other ways, such as welding.

The bearing has a compact structure and small size, which can meet installation requirements in a small space and is beneficial to meet design requirements of airplane miniaturization.

In the above embodiments, an inner hole of the bearing seat 201 is a step hole, which includes a large-diameter hole section and a small-diameter hole section. A step surface is formed at a connecting position of the large-diameter hole section and a small-diameter hole section, where the large-diameter hole section is further provided with an annular groove for mounting the snap ring 23, and the bearing outer ring 2021 is mounted between the step surface and the snap ring 23. In other words, the snap ring 23 and the step surface are configured to limit displacement on both sides of the bearing outer ring 2021, and both the snap ring 23 and the step surface define an axial position of the bearing outer ring 2021.

A radial width of the step surface and a size of the snap ring 23 may be set according to the specific bearing, as long as it does not affect the use of the bearing.

In the above embodiments, the step surface and the snap ring 23 limit the axial displacement of the bearing outer ring 2021, which is beneficial to avoid bearing axial movement and improve the overall operating stability of the system.

The bearing may be a deep groove ball bearing. Of course, the bearing may also be other types of bearings, such as a roller bearing or a tapered roller bearing.

Further, the horizontal tail control system further includes a limit retaining ring 21, where the center rod 30 is further provided with a limit groove (not shown in the Figure) fitted to the limit retaining ring 21 for installation, where the limit retaining ring 21 is configured to limit an outward axial displacement of the inner ring 2022. It should be noted that a direction away from a center position of the center rod 30 is defined as outward.

Although the annular groove and the limit groove are not shown in the figures, they do not hinder understanding and implementation of technical solutions herein by those skilled in the art.

The two horizontal tails 10 in the horizontal tail control system have hollowed structures, the hollowed structure is provided with a supporting rib 11. The supporting rib 11 is fixed to an end section of the center rod 30 by bolts or screws. As shown in the figure, the end section of the center rod 30 is a solid structure. The supporting rib 11 is provided with a mounting groove on a side wall facing the center rod 30, and a shaft section of the center rod 30, which is close to the end section, is supported inside the mounting groove. A screw 12 is arranged axially, the screw 12 passes through a bottom wall of the mounting groove to connect and fix the center rod 30. During specific installation, a distal end section of the center rod 30 is capable of passing through the rib, so that the center rod 30 is capable of supporting the two horizontal tails 10 to a certain extent and enhancing the stability of the mechanism.

In order to reduce the overall weight of the airplane, part of the shaft section of the center rod 30 may also be provided as a hollow shaft.

In the above various embodiments, the driving assembly includes a rudder 50 and a connecting piece 40, one end of the connecting piece 40 is hinged with the driving shaft of the rudder 50, and the other end is connected and fixed to the center rod 30, where a driving shaft of the rudder 50 is capable of moving in a vertical direction to drive the center rod 30 to rotate through the connecting piece 40.

It can be seen from the above description that the rudder 50 herein is a linear rudder. The driving shaft reciprocates along a straight line. By controlling a linear displacement of the driving shaft, a rotation angle of the center rod 30 may be controlled, so that the horizontal tail 10 rotates by a predetermined angle.

A servo system of the rudder 50 is controlled by pulses with variable width, and the control accuracy is relatively high, which may realize small-angle adjustments of the horizontal tail 10 and improve the flexibility of adjustment. Moreover, a volume of the rudder 50 is relatively small, which may reduce the installation space, to meet usage requirements of small airplanes.

In a specific embodiment, the connecting piece 40 includes a sleeve 401. A middle rod section of the center rod 30 is mounted inside the sleeve 401, where coaxial through holes are provided on the middle rod section and the sleeve 401 to mount a fastening bolt 60. That is, the sleeve 401 is provided on a side of the connecting piece 40 close to the center rod 30, and the center rod 30 is mounted inside the sleeve 401, and the center rod 30 and the sleeve 401 are fastened by one or two or more fastening bolts 60. The accompanying drawings herein show a specific embodiment in which the center rod 30 and the sleeve 401 are fastened by two bolts. FIG. 5 shows a schematic diagram of the sleeve 401 provided with two through holes 40a.

Of course, elastic components such as washers and gaskets may be added to the connecting position of the center rod 30 and the sleeve 401.

Of course, the connection and fixing method of the connecting piece 40 and the center rod 30 is not limited to the description herein, and the connecting piece 40 and the center rod 30 may be fixed by welding.

In the above embodiments, the connecting piece 40 and the driving shaft of the rudder 50 are connected by a ball bearing, and the connecting piece 40 is provided, on an end facing the rudder 50, with a U-shaped mounting frame 402, and the ball bearing is mounted between two parallel walls of the U-shaped mounting frame 402. The ball bearing may be a joint deep groove ball bearing, where a ball head of joint deep groove ball bearing 43 may be mounted on the driving shaft of the rudder 50, and a ball of joint deep groove ball bearing 42 is limited in position between the two parallel walls of the U-shaped frame. Specifically, the ball of joint deep groove ball bearing 42 may be in plane contact with a positioning steel sleeve 41 for positioning and be firmly connected to a positioning steel sleeve 41.

An intermeshing dual-rotor helicopter is further provided according to the present application, which includes the fuselage and the horizontal tail control system described in any one of the above embodiments.

The intermeshing dual-rotor helicopter provided according to the present application has the above horizontal tail control system, so the intermeshing dual-rotor helicopter also has the above technical effects of the horizontal tail control system.

The horizontal tail may be mounted on a tail section of the intermeshing dual-rotor helicopter.

For other structures of the intermeshing dual-rotor helicopter, reference may be made to the conventional technology, which is not described in detail herein.

The intermeshing dual-rotor helicopter and the horizontal tail control system provided by the present application are introduced in detail in the above. Specific examples are used in this specification to illustrate the principle and implementation of the present application. The description of the above embodiments is only used to facilitate understanding of the method and core concept of the present application. It should be noted that, for those skilled in the art, many modifications and improvements may be made to the present invention without departing from the scope of the appended claims.

## Claims

1. A horizontal tail control system, comprising a driving assembly, a rotating assembly (20), two horizontal tails (10) and a center rod (30), wherein the two horizontal tails (10) are capable of being rotatably supported on a fuselage through the rotating assembly (20), wherein a center shaft of the rotating assembly (20) is parallel to length extension directions of the two horizontal tails (10), wherein the driving assembly is configured to drive the two horizontal tails (10) to rotate around the center shaft of the rotating assembly (20); wherein two ends of the center rod (30) are respectively connected and fixed to the two horizontal tails (10); the center rod (30) is rotatably supported on the fuselage through the rotating assembly (20), and is driven by the driving assembly to rotate around the center shaft of the rotating assembly (20);
wherein the driving assembly comprises a rudder (50) and a connecting piece (40), one end of the connecting piece (40) is hinged with a driving shaft of the rudder (50), and the other end of the connecting piece (40) is connected and fixed to the center rod (30), wherein the driving shaft of the rudder (50) is capable of moving in an axial direction of the driving shaft of the rudder (50) to drive the center rod (30) to rotate through the connecting piece (40);
wherein outer contours of the two horizontal tails (10) are streamlined, and the two horizontal tails (10) have hollowed structures, the hollowed structure is provided with a supporting rib (11), the supporting rib (11) is passed through by an end of the center rod (30) and is fixed and connected to the center rod (30) by bolts;
wherein at least a shaft section at an end portion of the center rod (30) has a solid structure, a side wall of the supporting rib (11) facing the center rod (30) is provided with a mounting groove, and the shaft section at the end portion of the center rod (30) is supported at the mounting groove; wherein the horizontal tail control system further comprises a screw (12) arranged axially, the screw (12) passes through a bottom wall of the mounting groove to connect and fix the center rod (30);
wherein the connecting piece (40) comprises a sleeve (401), a middle rod section of the center rod (30) is mounted inside the sleeve (401), and coaxial through holes are provided on the middle rod section and the sleeve (401) to mount a fastening bolt;
wherein the connecting piece (40) and the driving shaft of the rudder (50) are connected by a ball bearing, and an end of the connecting piece (40) facing the rudder is provided with a U-shaped mounting frame (402), and the ball bearing is mounted between two parallel walls of the U-shaped mounting frame (402);
wherein the rudder (50) is a linear rudder.

2. The horizontal tail control system according to claim 1, wherein the rotating assembly (20) comprises a bearing seat (201) and a bearing (202), the bearing (202) comprises an inner ring (2022) and an outer ring (2021) rotatable relative to each other, wherein the outer ring (2021) of the bearing (202) is mounted and fixed at a mounting hole of the bearing seat (201), and the inner ring (2022) is positioned with and mounted on the center rod (30), an end of the center rod (30) passes through the inner ring (2022) to connect and fix the two horizontal tails (10).

3. The horizontal tail control system according to claim 2, further comprising a snap ring (23), an inner hole of the bearing seat (201) is a step hole, the step hole comprises a large-diameter hole section and a small-diameter hole section, a step surface is formed at a connecting position of the large-diameter hole section and the small-diameter hole section, wherein the large-diameter hole section is further provided with an annular groove for mounting the snap ring (23), and the outer ring (2021) of the bearing is mounted between the step surface and the snap ring (23).

4. The horizontal tail control system according to claim 2, further comprising a limit retaining ring (21), wherein the center rod (30) is further provided with a limit groove fitted to the limit retaining ring (21) for installation, wherein the limit retaining ring (21) is configured to limit an outward axial displacement of the inner ring (2022).

5. An intermeshing dual-rotor helicopter, comprising a fuselage and the horizontal tail control system according to any one of claims 1 to 4.

## Patentansprüche

1. Horizontalruder-Steuerungssystem, das eine Antriebsbaugruppe, eine Drehbaugruppe (20), zwei Höhenleitwerke (10) und eine Mittelstange (30) umfasst, wobei die beiden Höhenleitwerke (10) durch die Drehbaugruppe (20) drehbar an einem Rumpf gelagert werden können, wobei eine Mittelwelle der Drehbaugruppe (20) parallel zu den Längsausdehnungsrichtungen der beiden Höhenleitwerke (10) verläuft, wobei die Antriebsbaugruppe so konfiguriert ist, dass sie die beiden Höhenleitwerke (10) so antreibt, dass sie sich um die Mittelwelle der Drehbaugruppe (20) drehen; wobei zwei Enden der Mittelstange (30) jeweils mit den beiden Höhenleitwerken (10) verbunden und daran befestigt sind; die Mittelstange (30) durch die Drehbaugruppe (20) drehbar am Rumpf gelagert ist und durch die Antriebsbaugruppe angetrieben wird, um sich um die Mittelwelle der Drehbaugruppe (20) zu drehen;
wobei die Antriebsanordnung ein Ruder (50) und ein Verbindungsstück (40) umfasst, wobei ein Ende des Verbindungsstücks (40) mit einer Antriebswelle des Ruders (50) gelenkig verbunden ist und das andere Ende des Verbindungsstücks (40) mit der Mittelstange (30) verbunden und daran befestigt ist, wobei die Antriebswelle des Ruders (50) in der Lage ist, sich in einer axialen Richtung der Antriebswelle des Ruders (50) zu bewegen, um die Mittelstange (30) anzutreiben, damit sie sich durch das Verbindungsstück (40) dreht;
wobei die Außenkonturen der beiden horizontalen Schwänze (10) stromlinienförmig sind und die beiden horizontalen Schwänze (10) ausgehöhlte Strukturen aufweisen, die ausgehöhlte Struktur mit einer Stützrippe (11) versehen ist, die Stützrippe (11) von einem Ende der Mittelstange (30) durchsetzt ist und mit der Mittelstange (30) durch Bolzen befestigt und verbunden ist;
wobei mindestens ein Wellenabschnitt an einem Endabschnitt der Mittelstange (30) eine massive Struktur aufweist, eine Seitenwand der Stützrippe (11), die der Mittelstange (30) zugewandt ist, mit einer Montagenut versehen ist und der Wellenabschnitt an dem Endabschnitt der Mittelstange (30) in der Montagenut gelagert ist; wobei das horizontale Hecksteuersystem ferner eine Schraube (12) umfasst, die axial angeordnet ist, wobei die Schraube (12) durch eine Bodenwand der Montagenut verläuft, um die Mittelstange (30) zu verbinden und zu befestigen;
wobei das Verbindungsstück (40) eine Hülse (401) umfasst, ein mittlerer Stangenabschnitt der mittleren Stange (30) innerhalb der Hülse (401) angebracht ist und koaxiale Durchgangslöcher an dem mittleren Stangenabschnitt und der Hülse (401) vorgesehen sind, um eine Befestigungsschraube anzubringen;
wobei das Verbindungsstück (40) und die Antriebswelle des Ruders (50) durch ein Kugellager verbunden sind, und ein Ende des Verbindungsstücks (40), das dem Ruder zugewandt ist, mit einem U-förmigen Montagerahmen (402) versehen ist, und das Kugellager zwischen zwei parallelen Wänden des U-förmigen Montagerahmens (402) montiert ist;
wobei das Ruder (50) ein lineares Ruder ist.

2. Horizontalruder-Steuerungssystem nach Anspruch 1, wobei die Drehbaugruppe (20) einen Lagersitz (201) und ein Lager (202) umfasst, wobei das Lager (202) einen Innenring (2022) und einen Außenring (2021) umfasst, die relativ zueinander drehbar sind, wobei der Außenring (2021) des Lagers (202) an einem Montageloch des Lagersitzes (201) montiert und befestigt ist, und der Innenring (2022) mit der Mittelstange (30) positioniert und an dieser montiert ist, wobei ein Ende der Mittelstange (30) durch den Innenring (2022) hindurchgeht, um die beiden horizontalen Schwänze (10) zu verbinden und zu befestigen.

3. Horizontalruder-Steuerungssystem nach Anspruch 2, ferner umfassend einen Sprengring (23), ein Innenloch des Lagersitzes (201) ist ein Stufenloch, das Stufenloch umfasst einen Lochabschnitt mit großem Durchmesser und einen Lochabschnitt mit kleinem Durchmesser, eine Stufenfläche an einer Verbindungsposition des Lochabschnitts mit großem Durchmesser und des Lochabschnitts mit kleinem Durchmesser ausgebildet ist, wobei der Lochabschnitt mit großem Durchmesser ferner mit einer ringförmigen Nut zur Montage des Sprengrings (23) versehen ist und der Außenring (2021) des Lagers zwischen der Stufenfläche und dem Sprengring (23) montiert ist.

4. Horizontalruder-Steuerungssystem nach Anspruch 2, das ferner einen Begrenzungs-Haltering (21) umfasst, wobei die mittlere Stange (30) ferner mit einer Begrenzungsnut versehen ist, die zur Installation in den Begrenzungs-Haltering (21) eingepasst ist, wobei der Begrenzungs-Haltering (21) so konfiguriert ist, dass er eine axiale Verschiebung des Innenrings (2022) nach außen begrenzt.

5. Ineinandergreifender Doppelrotor-Hubschrauber, umfassend einen Rumpf und das Höhenleitwerk-Steuerungssystem nach einem der Ansprüche 1 bis 4.

## Revendications

1. Système de commande d'empennage horizontal comprenant un ensemble de commande, un ensemble rotatif (20), deux empennages horizontaux (10) et une tige centrale (30), dans lequel les deux empennages horizontaux (10) peuvent être supportés en rotation sur un fuselage par l'intermédiaire de l'ensemble rotatif (20), dans lequel un arbre central de l'ensemble rotatif (20) est parallèle aux directions d'extension de longueur des deux empennages horizontaux (10), dans lequel l'ensemble de commande est configuré pour entraîner les deux empennages horizontaux (10) en rotation autour de l'arbre central de l'ensemble rotatif (20) ; dans lequel les deux extrémités de la tige centrale (30) sont respectivement reliées et fixées aux deux queues horizontales (10) ; la tige centrale (30) est supportée en rotation sur le fuselage par l'intermédiaire de l'ensemble rotatif (20), et est entraînée par l'ensemble d'entraînement pour tourner autour de l'arbre central de l'ensemble rotatif (20) ;
dans lequel l'ensemble d'entraînement comprend un gouvernail (50) et une pièce de liaison (40), une extrémité de la pièce de liaison (40) est articulée avec un arbre d'entraînement du gouvernail (50), et l'autre extrémité de la pièce de liaison (40) est connectée et fixée à la tige centrale (30), dans lequel l'arbre d'entraînement du gouvernail (50) est capable de se déplacer dans une direction axiale de l'arbre d'entraînement du gouvernail (50) pour entraîner la tige centrale (30) à tourner à travers la pièce de liaison (40) ;
dans lequel les contours extérieurs des deux queues horizontales (10) sont profilés, et les deux queues horizontales (10) ont des structures creuses, la structure creuse est pourvue d'une nervure de support (11), la nervure de support (11) est traversée par une extrémité de la tige centrale (30) et est fixée et connectée à la tige centrale (30) par des boulons ;
dans lequel au moins une section d'arbre à une partie d'extrémité de la tige centrale (30) a une structure solide, une paroi latérale de la nervure de support (11) faisant face à la tige centrale (30) est pourvue d'une rainure de montage, et la section d'arbre à la partie d'extrémité de la tige centrale (30) est supportée à la rainure de montage ; dans lequel le système de commande d'anticouple horizontal comprend en outre une vis (12) disposée axialement, la vis (12) passe à travers une paroi inférieure de la rainure de montage pour relier et fixer la tige centrale (30) ;
la pièce de liaison (40) comprend un manchon (401), une section de tige centrale (30) est montée à l'intérieur du manchon (401), et des trous de passage coaxiaux sont prévus sur la section de tige centrale et le manchon (401) pour monter un boulon de fixation ;
dans lequel la pièce de liaison (40) et l'arbre d'entraînement du gouvernail (50) sont reliés par un roulement à billes, et une extrémité de la pièce de liaison (40) faisant face au gouvernail est pourvue d'un cadre de montage en forme de U (402), et le roulement à billes est monté entre deux parois parallèles du cadre de montage en forme de U (402) ;
dans lequel le gouvernail (50) est un gouvernail linéaire.

2. Le système de commande d'empennage horizontal selon la revendication 1, dans lequel l'ensemble rotatif (20) comprend un siège de roulement (201) et un roulement (202), le roulement (202) comprenant une bague intérieure (2022) et une bague extérieure (2021) rotatives l'une par rapport à l'autre, la bague extérieure (2021) du roulement (202) est montée et fixée à un trou de montage du siège de roulement (201), et la bague intérieure (2022) est positionnée et montée sur la tige centrale (30), une extrémité de la tige centrale (30) passe à travers la bague intérieure (2022) pour relier et fixer les deux queues horizontales (10).

3. Le système de commande d'empennage horizontal selon la revendication 2, comprenant en outre un anneau d'arrêt (23), un trou intérieur du siège de roulement (201) est un trou en escalier, le trou en escalier comprend une section de trou de grand diamètre et une section de trou de petit diamètre, une surface de marche est formée à une position de raccordement de la section du trou de grand diamètre et de la section du trou de petit diamètre, la section du trou de grand diamètre étant en outre pourvue d'une rainure annulaire pour le montage du circlip (23), et la bague extérieure (2021) du roulement est montée entre la surface de marche et le circlip (23).

4. Le système de commande d'empennage horizontal selon la revendication 2, comprenant en outre un anneau de retenue de limite (21), dans lequel la tige centrale (30) est en outre pourvue d'une rainure de limite adaptée à l'anneau de retenue de limite (21) pour l'installation, dans lequel l'anneau de retenue de limite (21) est configuré pour limiter un déplacement axial vers l'extérieur de l'anneau intérieur (2022).

5. Hélicoptère à deux rotors imbriqués, comprenant un fuselage et le système de commande d'empennage horizontal selon l'une quelconque des revendications 1 à 4.
